# EUROPÄISCHE PATENTSCHRIFT

(11) **EP 3 705 386 B1**
(45) Veröffentlichungstag und Bekanntmachung des Hinweises auf die Patenterteilung: **10.05.2023**
(21) Anmeldenummer: 20161494.8
(22) Anmeldetag: 06.03.2020
(51) Int. Cl.: B62D 21/03, B62D 21/09, B62D 33/077

(54) **HILFSRAHMEN**
SUBFRAME
CADRE AUXILIAIRE

(30) Priorität: 07.03.2019 AT 5003119 U
(43) Veröffentlichungstag der Anmeldung: 09.09.2020
(73) Patentinhaber: Palfinger AG, 5101 Bergheim bei Salzburg (AT)
(72) Erfinder: FABI, Daniel, 5222 Munderfing (AT)
(74) Vertreter: Torggler & Hofmann Patentanwälte - Innsbruck

(56) Entgegenhaltungen:
- DE-A1- 3 033 707
- DE-A1- 3 535 634

## Beschreibung

Die vorliegende Erfindung betrifft einen Hilfsrahmen mit den Merkmalen des Oberbegriffs des Anspruchs 1 und ein Fahrzeug mit einem solchen Hilfsrahmen. Im Stand der Technik bekannte Hilfsrahmen werden dazu eingesetzt, ein Arbeitsgerät an einem Fahrzeugrahmen eines Fahrzeugs zu montieren, wobei der Hilfsrahmen üblicherweise zwischen dem Fahrzeugrahmen und dem auf dem Hilfsrahmen montierten Arbeitsgerät angeordnet ist. Solche Hilfsrahmen weisen in der Regel Längsträger und zwischen diesen verlaufende Querträger auf. Zur Montage des Hilfsrahmens auf dem Fahrzeugrahmen werden die Längsträger gewöhnlich auf Fahrzeugrahmen-Längsträgern des Fahrzeugrahmens aufgesetzt und mit diesen verbunden, beispielsweise verschraubt. Um die sich ergebende Bauhöhe des Hilfsrahmens und des Fahrzeugrahmens - und damit die Ladekante eines auf den Hilfsrahmen aufgesetzten Arbeitsgeräts - gering zu halten, weisen bekannte Hilfsrahmen eine geringe Bauhöhe und somit eine geringe Steifigkeit auf. Bei Betrieb eines auf dem Hilfsrahmen montierten Arbeitsgeräts in Form beispielsweise eines Krans können durch vom Arbeitsgerät angehobene Lasten unterschiedliche Kräfte wie etwa Torsionskräfte auf den Hilfsrahmen und somit auf den Fahrzeugrahmen einwirken, wodurch es zu unerwünschten Verformungen (speziell Verwindungen) des Hilfsrahmens und des Fahrzeugrahmens kommen kann.

Aus der DE 3535634 A1 ist ein Montagerahmen mit verstellbaren Längsträgern für einen Kofferaufbau für ein Nutzfahrzeug bekannt. Sie offenbart die Merkmale des Oberbegriffs des Anspruchs 1.

Aus der DE 3033707 A1 ist Kofferbodenrahmen mit Längsträgern und Querträgern bekannt.

Aufgabe der Erfindung ist die Bereitstellung eines Hilfsrahmens, durch welchen sich die unerwünschten Verformungen verringern lassen können.

Diese Aufgabe wird durch einen Hilfsrahmen mit den Merkmalen des Anspruchs 1 und einem Fahrzeug mit einem solchen Hilfsrahmen gelöst. Vorteilhafte Ausführungsformen der Erfindung sind in den abhängigen Ansprüchen definiert.

Wie auch im Stand der Technik bekannte Hilfsrahmen ist der erfindungsgemäße Hilfsrahmen zur Montage zumindest eines Arbeitsgeräts an einem Fahrzeugrahmen eines Fahrzeugs geeignet. Es ist jedoch auch denkbar, dass weitere Fahrzeugaufbauten wie etwa eine Ladefläche für eine Nutzlast am Hilfsrahmen montiert werden können. Bei einem Arbeitsgerät kann es sich insbesondere um zumindest eine hydraulische Hebevorrichtung wie beispielsweise einen Kran oder ein Hakenladegerät handeln. Unter einem Fahrzeugrahmen kann ein als Fahrgestell, Rahmen, Chassis oder Untergestell bezeichnetes tragendes Teil, etwa zum Tragen des Antriebs und der Karosserie, eines Fahrzeugs verstanden werden.

Der erfindungsgemäße Hilfsrahmen weist zunächst zumindest zwei sich in einer Längsrichtung erstreckende Längsträger und zumindest zwei zwischen den zumindest zwei Längsträgern verlaufenden Querträger auf, wobei sich die zumindest zwei Querträger quer zur Längsrichtung der zumindest zwei Längsträger erstrecken. Ein solcher Hilfsrahmen kann beispielsweise ähnlich einem Leiterrahmen oder Kastenrahmen ausgebildet sein.

Im Unterschied zum Stand der Technik ist der erfindungsgemäße Hilfsrahmen nun dadurch gekennzeichnet, dass der Hilfsrahmen zumindest ein zumindest abschnittsweise zwischen den zumindest zwei Querträgern verlaufendes Versteifungselement zur Erhöhung der Torsionssteifigkeit des Hilfsrahmens aufweist.

Es kann also zusätzlich zu den Längsträgern zumindest ein im Wesentlichen in Längsrichtung der zumindest zwei Längsträger verlaufendes Versteifungselement zur Aufnahme von auf den Hilfsrahmen wirkenden Torsionskräften vorgesehen sein.

Das zumindest eine Versteifungselement kann zentral zwischen den Längsträgern angeordnet sein und zumindest abschnittsweise zwischen diesen verlaufen.

Eine zentrale Anordnung zwischen den Längsträgern kann einer mittigen und/oder symmetrisch zwischen den Längsträgern gelegenen Anordnung entsprechen.

Durch das zumindest eine Versteifungselement kann eine Torsionssteifigkeit des Hilfsrahmens erhöht werden, ohne dass dazu Modifikationen an den Längsträgern nötig sind. Dadurch kann sich ein torsionssteifer Hilfsrahmen mit vorteilhaft niedriger Bauhöhe bereitstellen lassen. Es soll nicht ausgeschlossen sein, dass durch das zumindest eine Versteifungselement auch eine Erhöhung der Biegesteifigkeit des Hilfsrahmens erreicht werden kann.

Das zumindest eine Versteifungselement des Hilfsrahmens kann sich über zumindest einen Abschnitt der Längsträger zwischen den zumindest zwei Querträgern verlaufen. Es ist denkbar, dass die Längserstreckung des zumindest einen Versteifungselements im Wesentlichen der Längserstreckung der zumindest zwei Längsträger entspricht. Ist auch denkbar, dass die Längserstreckung des zumindest einen Versteifungselements geringer ist, als die Längserstreckung der mindestzwei Längsträger.

Es ist vorgesehen, dass das zumindest eine Versteifungselement jeweils kraftschlüssig an einem jeweiligen Befestigungsbereich jeweils mit den zumindest zwei Querträgern verbunden ist.

So kann beispielsweise eine auf den Hilfsrahmen lokal - beispielsweise an einer Befestigungsstelle für das Arbeitsgerät an den Längs- oder Querträgern - einwirkende Torsionskraft über einen der zumindest zwei Querträger durch die kraftschlüssige Verbindung des zumindest einen Versteifungselements mit dem jeweiligen Querträger auf das zumindest eine Versteifungselement übertragen werden. Die so auf das zumindest eine Versteifungselement übertragene Torsionskraft kann wiederum auf den zweiten der zumindest zwei Querträger übertragen werden, wodurch sich die lokal auf den Hilfsrahmen einwirkende Torsionskraft über den gesamten Hilfsrahmen verteilen lässt. Dadurch kann es insgesamt zu einer verringerten Verwindung des Hilfsrahmens kommen.

Wenn das zumindest eine Versteifungselement jeweils kraftschlüssig an einem jeweiligen Befestigungsbereich jeweils mit den zumindest zwei Querträgern verbunden ist, kann zusätzlich zu den zumindest zwei Längsträgern eine Torsionskraft über das zumindest eine Versteifungselement zwischen den Querträgern übertragen werden.

Es kann vorgesehen sein, dass das zumindest eine Versteifungselement jeweils über lösbare und/oder unlösbare Verbindungen formschlüssig an einem jeweiligen Befestigungsbereich jeweils mit den zumindest zwei Querträgern verbunden ist. Durch eine solche formschlüssige Verbindung kann zusätzlich zu den zumindest zwei Längsträgern eine Torsionskraft über das zumindest eine Versteifungselement zwischen den Querträgern übertragen werden. Die Verbindung kann lösbar und/oder unlösbar ausgebildet sein, beispielsweise durch eine Schraub-, Niet- oder Schweißverbindung. Es ist ebenso denkbar, dass die formschlüssige Verbindung zwischen dem zumindest einen Versteifungselement und den zumindest zwei Querträgern durch eine entsprechende Querschnittsform des Versteifungselements und zumindest jeweils eine damit korrespondierende Ausnehmung in den zumindest zwei Querträgern ausgebildet ist.

Unter einem Befestigungsbereich an einem Querträger kann ein Bereich des Querträgers verstanden werden, an welchem das zumindest eine Versteifungselement mit dem Querträger verbunden ist. Der Befestigungsbereich kann dem Bereich der Krafteinleitung zwischen dem zumindest einen Versteifungselement und dem Querträger entsprechen.

Dabei kann vorteilhaft sein, wenn die zumindest zwei Querträger jeweils im Befestigungsbereich eine Verstärkung aufweisen. Die Verstärkung kann vorzugsweise durch eine bereichsweise mehrlagige Ausbildung der Querträger ausgebildet sein. Es ist auch denkbar, dass die Verstärkung im Befestigungsbereich durch eine höhere Wandstärke des Querträgers ausgebildet ist.

Die zumindest zwei Längsträger und/oder die zumindest zwei Querträger können allgemein profiliert ausgebildet sein und eine offene und/oder geschlossene Querschnittsform aufweisen. So ist es beispielsweise denkbar, dass die zumindest zwei Längsträger jeweils eine im Wesentlichen rechteckige Querschnittsform aufweisen und die zumindest zwei Querträger jeweils eine offene, beispielsweise U-förmige, Querschnittsform aufweisen.

Es kann vorteilhaft sein, wenn das Versteifungselement zumindest einen radial abstehenden Flansch zur Verbindung mit den Querträgern aufweist. Ein Flansch, also ein zumindest von einem Teil des Umfangs des Versteifungselements herausragender, flächiger Steg, kann eine großflächige Verbindung mit den Querträgern erlauben, sodass sich die eingeleitete Kraft gut auf den Befestigungsbereich verteilen lassen kann.

Es ist vorgesehen, dass das zumindest eine Versteifungselement über eine torsionsfeste Verbindung mit Verbindungsmitteln mit den Querträgern verbunden ist. Da das zumindest eine Versteifungselement primär zur Erhöhung der Torsionssteifigkeit des Hilfsrahmens dient, ist an die Verbindung zwischen den zumindest zwei Querträgern und dem zumindest einen Versteifungselement primär die Anforderung gestellt, dass über diese Torsionskräfte übertragen werden können. Die Verbindungsmittel können vorzugsweise in Form von zumindest einer Spannhülse oder Schraubverbindungen vorliegen. Es ist auch denkbar, dass die Verbindungsmittel Schweiß- oder Nietverbindungen umfassen.

Bei der Verbindung des zumindest einen Versteifungselement mit den zumindest zwei Querträgern kann es vorteilhaft sein, wenn in dem zumindest einen radial abstehenden Flansch und den zumindest zwei Querträgern jeweils miteinander korrespondierende Aufnahmeöffnungen für die Verbindungsmittel vorgesehen sind, wobei die Aufnahmeöffnungen koaxial, vorzugsweise konzentrisch, zu einer Längsachse des Versteifungselements angeordnet sind. Die Aufnahmeöffnungen für die Verbindungsmittel können in regelmäßigen Abständen zueinander und in einem regelmäßigen Abstand zur Oberfläche des Versteifungselements angeordnet sein.

Es ist vorgesehen, dass die zumindest zwei Querträger jeweils profiliert ausgebildet sind und in zumindest einem der zum zumindest zwei Querträger zumindest eine Ausnehmung zur zumindest teilweisen Aufnahme des zumindest einen Versteifungselements vorgesehen ist. Die Querträger können zumindest abschnittsweise eine offene, beispielsweise U-förmige, oder eine geschlossene, beispielsweise eine im Wesentlichen rechteckige, Querschnittsform aufweisen. In zumindest einem der zumindest zwei Querträger kann zumindest eine Ausnehmung vorgesehen sein, in welche das zumindest eine Versteifungselement - beispielsweise mit einem Endbereich - hineinragen kann. Dadurch kann beispielsweise ermöglicht werden, dass die zumindest zwei Längsträger, die zumindest zwei Querträger und das Versteifungselement im Wesentlichen in einer gemeinsamen Ebene anordenbar sind.

Für den Hilfsrahmen kann vorgesehen sein, dass die zumindest zwei Längsträger und/oder die zumindest zwei Querträger jeweils eine Höhenerstreckung aufweisen und das zumindest eine Versteifungselement mit dessen Höhenerstreckung im Wesentlichen vollständig innerhalb der Höhenerstreckung der Längsträger und/oder der Höhenerstreckung der Querträger angeordnet ist.

In anderen Worten kann für den Hilfsrahmen vorgesehen sein, dass das zumindest eine Versteifungselement eine geringere oder gleiche Höhenerstreckung aufweist, als die Höhenerstreckung des Hilfsrahmens.

Für den Hilfsrahmen kann vorgesehen sein, dass die Querschnittsform der zumindest zwei Längsträger und/oder der zumindest zwei Querträger von der Querschnittsform des zumindest einen Versteifungselements abweicht.

Beispielsweise können die Längsträger und/oder die Querträger eine im Wesentlichen rechteckige, offene oder geschlossene Querschnittsform aufweisen, wodurch beispielsweise eine Montage auf einem Fahrzeugrahmen erleichtert werden kann. Das zumindest eine Versteifungselement kann beispielsweise eine davon abweichende, polygonale oder kreisrunde Querschnittsform aufweisen, wodurch sich insbesondere die Torsionssteifigkeit optimieren lassen kann.

Für den Hilfsrahmen kann vorgesehen sein, dass dieser zur unmittelbaren Montage an einem Fahrzeugrahmen eines Fahrzeugs ausgebildet ist. Der Hilfsrahmen kann dabei an den Längsträgern und/oder Querträgern zumindest eine Befestigungsstelle für das zumindest eine Arbeitsgerät aufweisen. Die Längsträger und/oder Querträgern können Befestigungsstellen zur Montage des Hilfsrahmens an einem Fahrzeugrahmen aufweisen.

Es kann vorgesehen sein, dass zur Montage eines Arbeitsgeräts auf einem Fahrzeugrahmen nur ein einzelner Rahmen, konkret nur ein einzelner erfindungsgemäßer Hilfsrahmen, nötig ist.

Für den Hilfsrahmen kann es allgemein von Vorteil sein, wenn die zumindest zwei Querträger jeweils mit den zumindest zwei Längsträgern über eine lösbare Verbindung, vorzugsweise über eine Schraubverbindung, miteinander verbunden sind. Ein solcher lösbar miteinander verbundener Hilfsrahmen, beispielsweise ein geschraubter Hilfsrahmen, hat den Vorteil, dass die Platzierung der zumindest zwei Querträger entlang der Längsrichtung der zumindest zwei Längsträger im Wesentlichen frei wählbar ist. Dadurch kann eine Anpassung (Lage der Querträger relativ zu Teilen des Fahrzeugs oder des Fahrzeugrahmens) des Hilfsrahmens an den zur Befestigung vorgesehenen Fahrzeugrahmen einfach folgen. Es ist ebenso denkbar, dass die Querträger mit den Längsträgern über unlösbare Verbindungen, wie etwa eine Nietverbindung oder eine Schweißverbindung, miteinander verbunden sind.

Es kann für die Hilfsrahmen von Vorteil sein, wenn das zumindest eine Versteifungselement gesondert von den Längsträgern ausgebildet ist. Dabei kann vorgesehen sein, dass das gesondert von den Längsträgern ausgebildete zumindest eine Versteifungselement über die zumindest zwei Querträger mit den Längsträgern verbunden ist.

Es kann besonders vorteilhaft sein, wenn die zumindest zwei Querträger eine quer zur Längsrichtung der zumindest zwei Längsträger verlaufende Quererstreckung aufweisen und das zumindest eine Versteifungselement im Wesentlichen in der Mitte der Quererstreckung zwischen den zumindest zwei Querträgern angeordnet ist. In anderen Worten gesagt, kann das Versteifungselement mittig zwischen den zumindest zwei Längsträgern angeordnet sein. Allgemein kann der Hilfsrahmen bei einer Verwindung eine Torsionsachse (unverformte Faser) aufweisen und das zumindest eine Versteifungselement so angeordnet sein, dass das zumindest eine Versteifungselement die Torsionsachse zumindest abschnittsweise umschließt. Dies kann zum Beispiel dadurch erreicht werden, dass das zumindest eine Versteifungselement mit dem Flächenschwerpunkt von dessen Querschnittsfläche auf der Torsionsachse des Hilfsrahmens angeordnet wird.

Für den Hilfsrahmen kann allgemein vorteilhaft sein, wenn das zumindest eine Versteifungselement im Wesentlichen parallel zu den zumindest zwei Längsträgern verläuft. Dies kann beispielsweise bei einem rechteckig ausgebildeten Hilfsrahmen Anwendung finden.

Für den Hilfsrahmen kann vorteilhaft sein, wenn das zumindest eine Versteifungselement in Form eines Hohlprofils ausgebildet ist. Dabei kann vorzugsweise vorgesehen sein, dass das Hohlprofil eine geschlossene Profilform aufweist. Das zumindest eine Versteifungselement kann beispielsweise rohrförmig ausgebildet sein. Eine konzentrische Anordnung mehrerer Versteifungselemente soll nicht ausgeschlossen sein.

Für Hilfsrahmen kann vorteilhaft sein, wenn das zumindest eine Versteifungselement einen polygonalen oder kreisrunden Querschnitt aufweist. Es ist denkbar, dass das zumindest eine Versteifungselement eine dreieckige, 4-eckige oder vieleckige Querschnittsform aufweist. In einer besonders vorteilhaften Ausführung ist das zumindest eine Versteifungselement mit einer kreisrunden Querschnittsform ausgebildet. Vorzugsweise weist die Querschnittsform entlang einer Längserstreckung des zumindest einen Versteifungselements eine konstante (gleichbleibende) Querschnittsfläche auf.

Es kann vorteilhaft sein, wenn der Hilfsrahmen zumindest eine Befestigungsstelle für das zumindest eine Arbeitsgerät in einem Bereich eines der zumindest zwei Querträger aufweist, wobei das zumindest eine Versteifungselement mit der zumindest einen Befestigungsstelle für das zumindest eine Arbeitsgerät verbunden ist. Die Befestigungsstelle kann beispielsweise in Form von an den zumindest zwei Längsträgern anordenbaren Konsolen, oder an einem der zumindest zwei Querträger oder in Form eines der zumindest zwei Querträger ausgebildet sein. Da die Krafteinleitung durch das Arbeitsgerät auf den Hilfsrahmen im Wesentlichen an der Befestigungsstelle erfolgt, kann das zumindest eine Versteifungselement vorteilhaft mit der Befestigungsstelle - direkt oder auch indirekt - verbunden sein. Es kann beispielsweise vorgesehen sein, dass das zumindest eine Arbeitsgerät an der zumindest einen Befestigungsstelle über eine Verschraubung befestigbar ist.

Es kann vorteilhaft sein, wenn das zumindest eine Versteifungselement einstückig ausgebildet ist. In einer bevorzugten Ausführungsform kann das zumindest eine Versteifungselement in Form eines einzelnen, durchgehenden Rohrs ausgebildet sein. In einer weiteren bevorzugten Ausführungsform kann vorgesehen sein, dass das zumindest eine Versteifungselement zumindest abschnittsweise einstückig ausgebildet ist. In einer solchen Ausführungsform kann das zumindest eine Versteifungselement, also in Form von miteinander - direkt oder indirekt -verbindbaren Versteifungsabschnitten ausgebildet sein.

Dabei kann das zumindest eine Versteifungselement zumindest zwei voneinander gesonderte und miteinander verbindbare Versteifungsabschnitte aufweisen. So kann beispielsweise ein zwischen den zumindest zwei Querträgern verlaufender Abschnitt des zumindest einen Versteifungselements aus zumindest zwei miteinander verbundenen Versteifungsabschnitten bestehen, oder das zumindest eine Versteifungselement des Hilfsrahmens aus miteinander verbundenen und jeweils zwischen zwei Querträgern verlaufenden Abschnitten bestehen, oder auch aus einer Kombination daraus bestehen.

Dabei kann vorteilhaft sein, wenn die zumindest zwei Versteifungsabschnitte jeweils zwischen zwei benachbarten Querträgern angeordnet sind. Das zumindest eine Versteifungselement des Hilfsrahmens kann so aus mehreren miteinander verbundenen (direkt oder indirekt) Versteifungsabschnitten bestehen, welche jeweils zwischen zwei Querträgern verlaufen.

Für den Hilfsrahmen kann es vorteilhaft sein, wenn die zumindest zwei Längsträger jeweils einstückig oder aus miteinander verbundenen Längsabschnitten ausgebildet sind. Bei einer Ausbildung der zumindest zwei Längsträger aus miteinander verbundenen Längsabschnitten kann der Hilfsrahmen längenveränderbar ausgebildet sein.

Wie eingangs bereits angeführt wurde, wird auch Schutz für ein Fahrzeug mit einem Fahrzeugrahmen und einem auf dem Fahrzeugrahmen angeordneten, wie zuvor beschriebenen Hilfsrahmen begehrt. Durch die Anordnung des Hilfsrahmens auf dem Fahrzeugrahmen kann vorteilhaft eine Erhöhung der Torsionssteifigkeit des Fahrzeugs erreicht werden. Vorzugsweise ist das Fahrzeug als ein Lastkraftwagen ausgebildet.

Vorzugsweise kann der erfindungsgemäße Hilfsrahmen unmittelbar auf dem Fahrzeugrahmen angeordnet sein. Auf weitere Rahmenaufbauten kann so verzichtet werden.

Für das Fahrzeug kann es vorteilhaft sein, wenn der auf dem Fahrzeugrahmen angeordnete Hilfsrahmen zumindest eine Befestigungsstelle für das zumindest eine Arbeitsgerät in einem Bereich eines der zum indest zwei Querträger aufweist. Die Befestigungsstelle kann beispielsweise in Form von an den zumindest zwei Längsträgern anordenbaren Konsolen, oder an einem der zumindest zwei Querträger oder in Form eines der zumindest zwei Querträger ausgebildet sein.

Dabei ist vorgesehen, dass das zumindest eine Versteifungselement mit der zumindest einen Befestigungsstelle für das zumindest eine Arbeitsgerät verbunden ist (direkt oder indirekt) und sich zumindest bis zu einer Hinterachse des Fahrzeugs erstreckt. Da die Krafteinleitung durch das Arbeitsgerät auf den Hilfsrahmen im Wesentlichen an der Befestigungsstelle erfolgt, kann das zumindest eine Versteifungselement vorteilhaft mit der Befestigungsstelle - direkt oder auch indirekt - verbunden sein.

Zumindest eine Befestigungsstelle für das zumindest eine Arbeitsgerät kann sich relativ zum Fahrzeug in einem Bereich benachbart zur Vorderachse des Fahrzeugs befinden. Alternativ oder zusätzlich kann sich zumindest eine Befestigungsstelle für das zumindest eine Arbeitsgerät relativ zum Fahrzeug in einem Bereich benachbart zur Hinterachse des Fahrzeugs (heckseitig) befinden.

Durch die Anordnung des Hilfsrahmens auf dem Fahrzeugrahmen wird eine auf den Hilfsrahmen einwirkende Kraft auf den Fahrzeugrahmen übertragen und von dort zumindest teilweise (es soll nicht ausgeschlossen sein, dass das Fahrzeug zusätzliche Abstützungen aufweist) über die Vorder- und Hinterachse über die Bereifung in die Fahrbahn, auf welcher das Fahrzeug abgestellt ist, eingeleitet. Durch einen erfindungsgemäßen Hilfsrahmen kann eine solche Krafteinleitung mit einer geringeren Verbindung des Hilfsrahmens, des Fahrzeugrahmens und des Fahrzeugs verbunden sein.

Es kann vorgesehen sein, dass das zumindest eine Arbeitsgerät an der zumindest einen Befestigungsstelle über eine Verschraubung befestigbar ist.

Ausführungsbeispiele der Erfindung werden anhand der Figuren diskutiert. Darin zeigen:
- Fig. 1a bis 1c: verschiedene Ansichten einer ersten Ausführung des Hilfsrahmens,
- Fig. 2a bis 2c: Detailansichten des Hilfsrahmens gemäß der Ausführung der Figur 1.
- Fig. 3a und 3b: verschiedene Ansichten zu einer zweiten Ausführung des Hilfsrahmens,
- Fig. 4: eine perspektivische Ansicht zu einer dritten Ausführung des Hilfsrahmens
- Fig. 5a bis 5c: verschiedene Ansichten zu einer Anordnung aus einem Fahrzeug, einem Arbeitsgerät und einem Hilfsrahmen gemäß der Ausführung der Figur 1, und
- Fig. 6: eine perspektivische Ansicht zu einer weiteren Anordnung aus einem Fahrzeug, zwei Arbeitsgeräten und einem Hilfsrahmen gemäß der Ausführung der Figur 1.

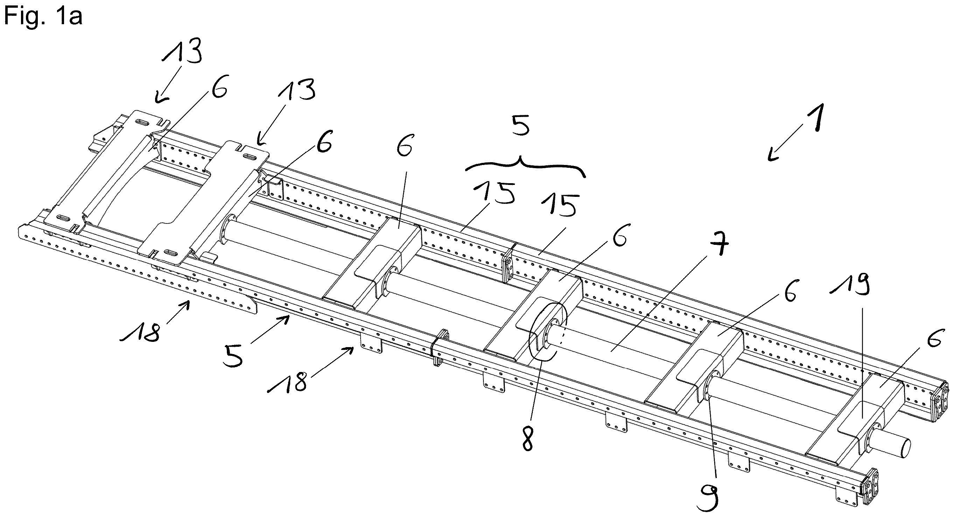

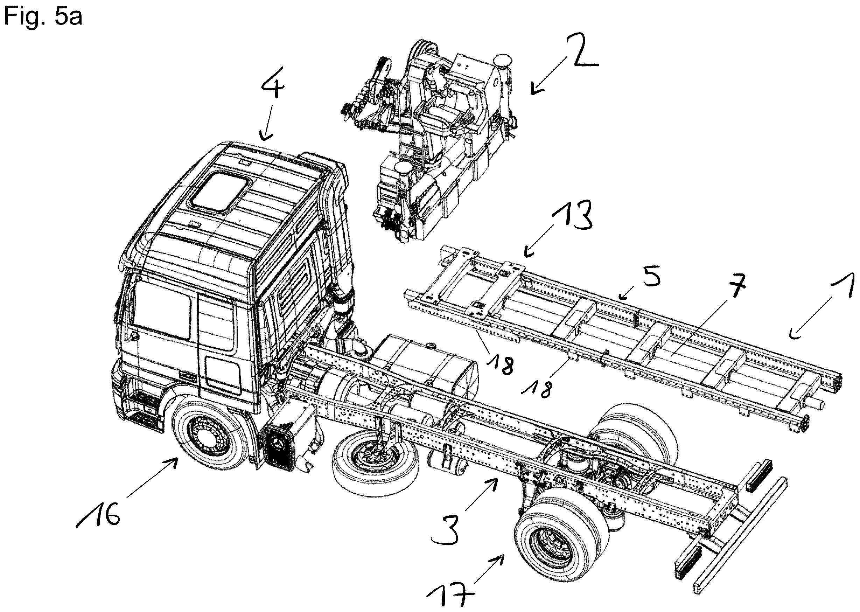

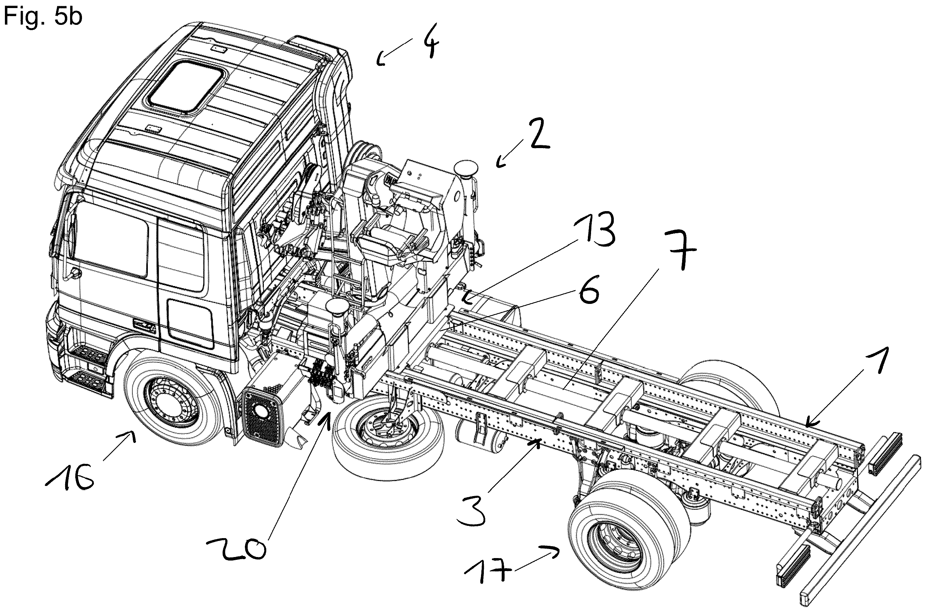

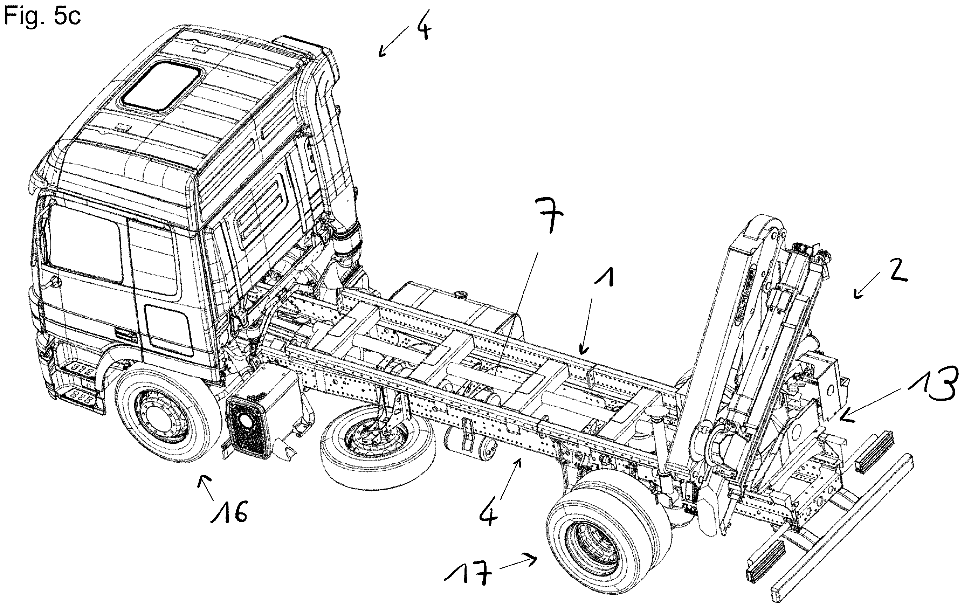

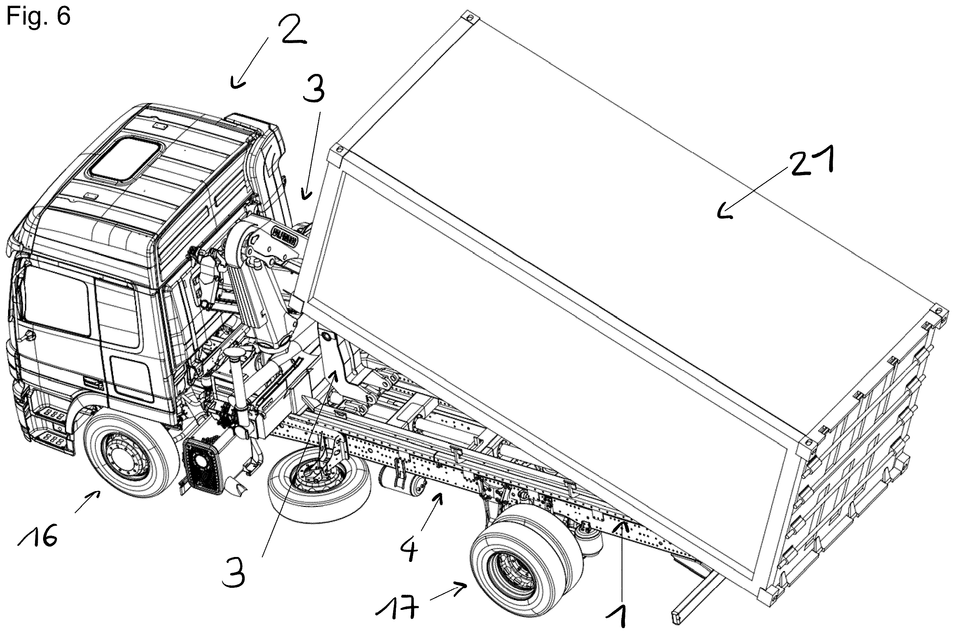

Die Figuren 1a bis 1c zeigen eine erste Ausführung eines Hilfsrahmens 1 zur Montage zumindest eines Arbeitsgeräts an einem Fahrzeugrahmen eines Fahrzeugs (hier nicht dargestellt, siehe beispielsweise Figur 5 und Figur 6) mit zwei sich in einer Längsrichtung erstreckenden Längsträgern 5 und mehreren zwischen den zwei Längsträgern 5 verlaufenden Querträgern 6. Die Längsträger 5 sind in dieser Ausführung jeweils aus zwei miteinander verbundenen Längsabschnitten 15 ausgebildet. Anders als dargestellt ist es auch denkbar, dass die Längsträger einstückig ausgebildet sind. Die Querträger 6 erstrecken sich jeweils quer zur Längsrichtung der zwei Längsträger 5 und sind mit diesen verbunden, das über nicht näher gezeigte Schraubverbindungen. Der Hilfsrahmen 1 weist ein abschnittsweise zwischen den Querträgern 6 verlaufendes Versteifungselement 7 zur Erhöhung der Torsionssteifigkeit des Hilfsrahmens 1 auf. Das Versteifungselement 7 ist zentral zwischen den Längsträgern 5 angeordnet.

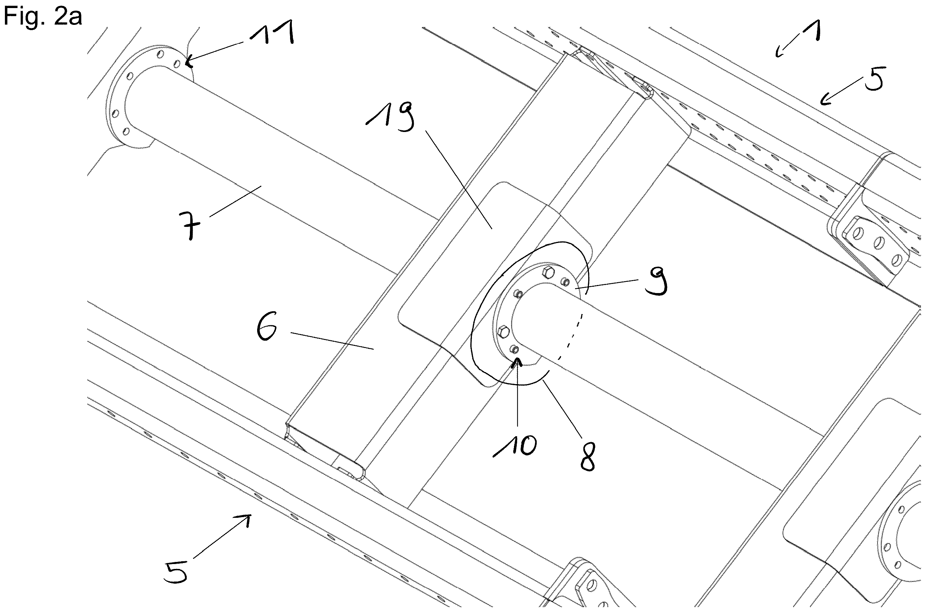

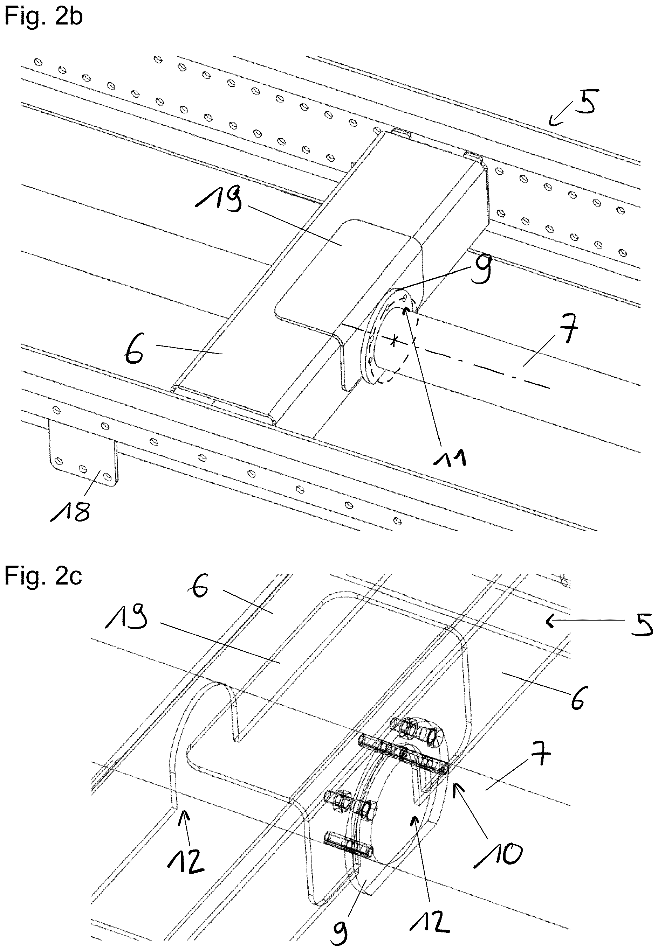

Das Versteifungselement 7 ist jeweils an einem Befestigungsbereich 8 (siehe dazu auch die Detailansichten der Figur 2) über einen radial vom Versteifungselement 7 abstehenden Flansch 9 an den entsprechenden Querträgern 6 befestigt. In der gezeigten Ausführung weisen die Querträger 6 jeweils im Befestigungsbereich 8 eine Verstärkung 9 durch eine bereichsweise mehrlagige Ausbildung der Querträger 6 auf. Anders als dargestellt wäre eine Verstärkung auch in Form einer Verdickung der Wandstärke des Querträgers 6 denkbar.

Der Hilfsrahmen 1 weist in der gezeigten Ausführung zwei Befestigungsstellen 13 für zumindest ein Arbeitsgerät auf, wobei die Befestigungsstellen 13 jeweils in Form eines Querträgers 6 ausgebildet sind. Das Versteifungselement 7 ist mit einer der Befestigungsstellen 13 direkt verbunden und mit der anderen Befestigungsstelle 13 indirekt über den Längsträger 5 verbunden.

Zur Montage des Hilfsrahmens 1 auf einem Fahrzeugrahmen weist dieser mehrere an den Längsträgern 5 angeordnete Befestigungsstellen 18 auf.

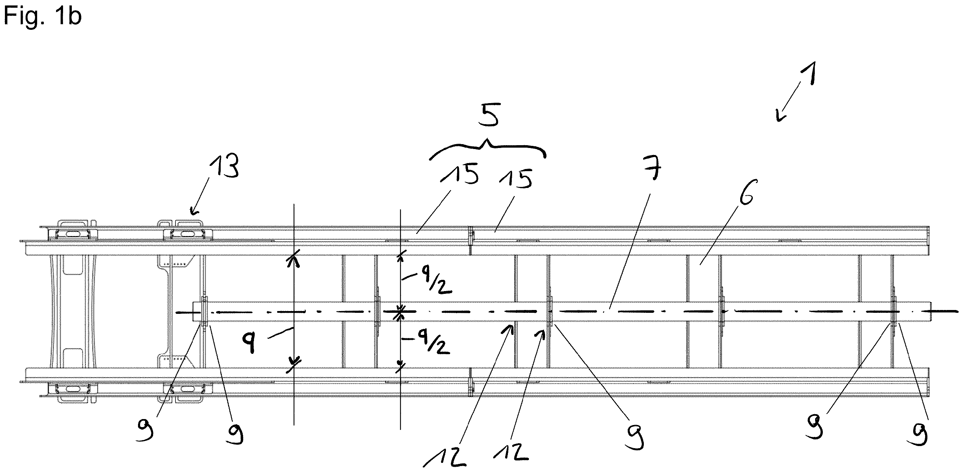

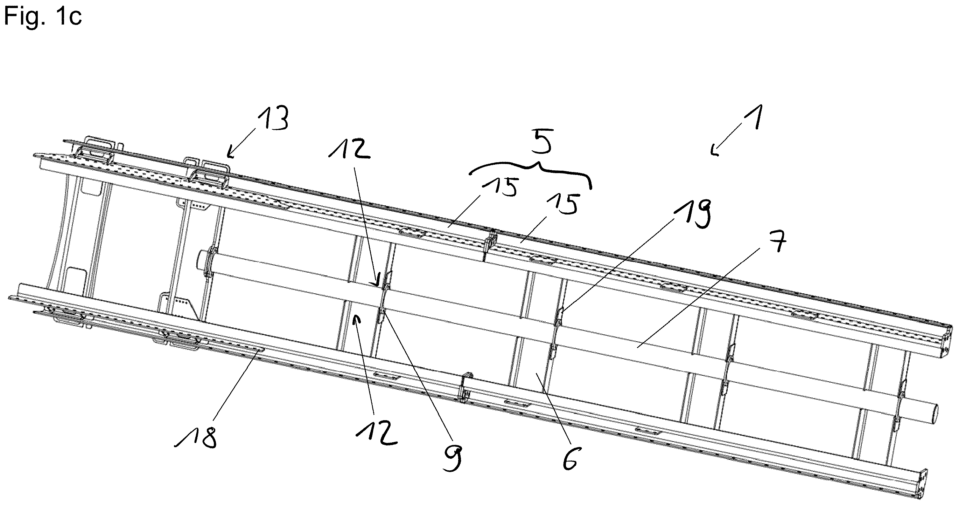

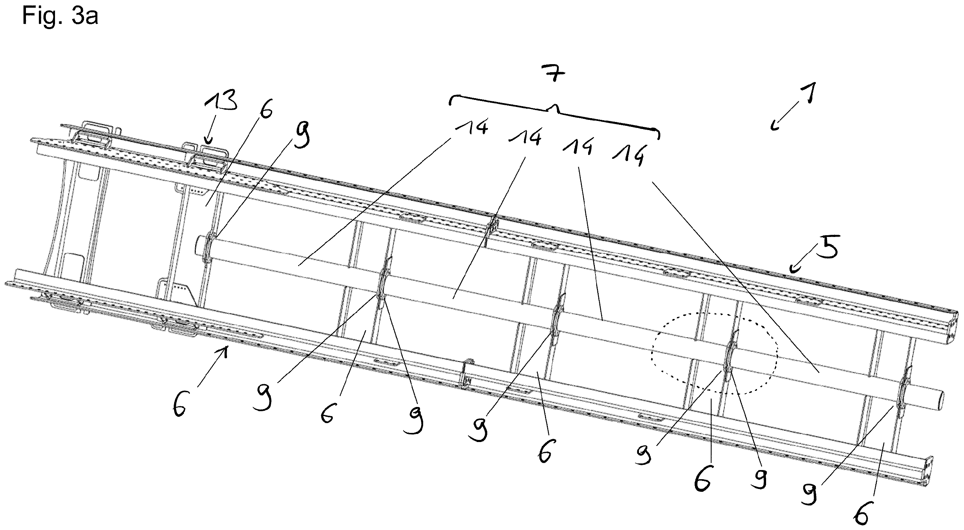

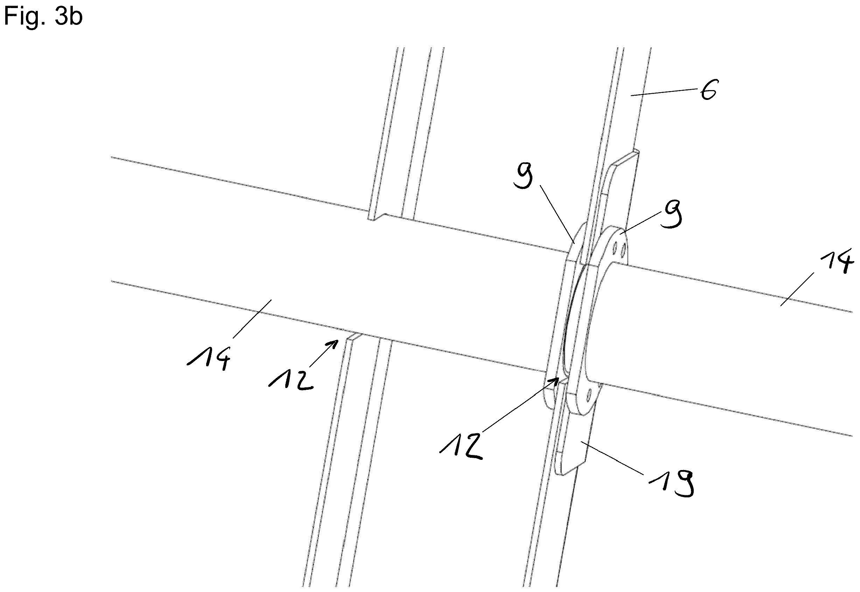

Wie den Ansichten der Figuren 1b und 1c zu entnehmen ist, weist der Hilfsrahmen 1 in dieser ersten Ausführung profiliert ausgebildete Querträger 6 auf, welche teilweise zumindest eine Ausnehmung 12 zur zumindest teilweisen Aufnahme des Versteifungselements 7 aufweisen. Die Profilform der Querträger entspricht im Wesentlichen einem offenen, U-förmigen Profilform. Andere Profilformen sind jedoch auch denkbar. Das Versteifungselement 7 ist hier einstückig ausgebildet (dies muss jedoch nicht zu sein, siehe beispielsweise Figur 3a und Figur 3b) und ist abschnittsweise innerhalb des Querschnittsprofils der Querträger 6 angeordnet. Das Versteifungselement 7 ist an den Endbereichen an den jeweiligen Querträgern 6 jeweils über zwei radial vom Versteifungselement 7 abstehende Flansche 9 befestigt.

Wie dargestellt ist das Versteifungselement 7 gesondert von den Längsträgern 5 ausgebildet ist. Auch verläuft das Versteifungselement 7 im Wesentlichen parallel zu den zwei Längsträgern 5, wobei sich dies für rechteckige Bauform des Hilfsrahmens 1 anbietet. Bei abweichenden Bauformen eines Hilfsrahmens muss der parallele Verlauf jedoch nicht gegeben sein.

Der Darstellung der Figur 1b ist zu entnehmen, dass die Querträger 6 für diese rechteckige Bauform des Hilfsrahmens 1 eine quer zur Längsrichtung der zwei Längsträger 5 verlaufende Quererstreckung q aufweisen und das Versteifungselement 7 in der Mitte der Quererstreckung q bei q/2 zwischen den zwei Querträgern 6 angeordnet ist.

In den Figuren 2a bis 2c sind Detailansichten des Hilfsrahmens 1 und insbesondere Detailansichten des Befestigungsbereichs 8 des Versteifungselements 7 gezeigt. Dabei ist erkennbar, dass das hier zumindest in dem gezeigten Abschnitt einstückig ausgebildete Versteifungselement 7 über in Aufnahmeöffnungen 11 des Flansches 9 und in entsprechende Aufnahmeöffnungen im Querträger 6 (hier nicht dargestellt) eingebrachte Verbindungsmittel 10, hier eine Kombination aus einer Verschraubung und Spannhülsen, zur Ausbildung einer zumindest torsionssteifen Verbindung mit einem im Befestigungsbereich 8 mit einer Verstärkung 19 versehenen Querträger 6 verbunden ist. Die Flansche 9 der Figur 2, welche nicht mit sichtbaren Verbindungsmitteln 10 versehen sind, können entweder noch nicht mit den Querträgern 6 verbunden worden sein oder nicht unmittelbar sichtbare Verbindungsmittel, beispielsweise in Form von Schweiß- oder Nietverbindungen, aufweisen.

In Figur 2b ist in der Detailansicht eines radial abstehenden Flansches 9 gezeigt. Dabei ist zu erkennen, dass die Aufnahmeöffnungen 11 für die Verbindungsmittel 10 koaxial, hier speziell konzentrisch, zu einer Längsachse des Versteifungselements 7 angeordnet sind.

Der Gitternetzlinien-Darstellung der Figur 2c ist zu entnehmen, dass der dargestellte Querträger 6 zur abschnittsweisen Aufnahme des im gezeigten Abschnitt einstückig ausgebildeten Versteifungselements 7 zwei Ausnehmungen 12 aufweist.

In den Figuren 3a und 3b ist eine Ausführung des Hilfsrahmens 1 gezeigt, bei welchem das Versteifungselement 7 aus mehreren voneinander gesondert und miteinander verbundenen Versteifungsabschnitten 14 ausgebildet ist. Die Versteifungsabschnitte 14 weisen in deren Endbereichen jeweils einen radial abstehenden Flansch 9 auf, mit welchen die Versteifungsabschnitte 14 jeweils zwischen zwei benachbarten Querträgern 6 befestigt sind.

In der Detailansicht der Figur 3b (strichlierter Bereich in der Figur 3a) ist erkennbar, wie zwei gesonderte Versteifungsabschnitte 14 über einen jeweils in einem Endbereich angeordneten Flansch 9 mit dem Querträger 6 verbunden sind. Der Querträger 6 weist zwei Ausnehmungen 12 auf, wobei hier eigentlich nur eine Ausnehmung 12 nötig wäre, um einen der Versteifungsabschnitte 14 abschnittsweise im Querschnittsprofil des Querträgers 6 anzuordnen.

In den Ausführungen des Hilfsrahmens 1 der Figuren 1, 2 und 3 (und die später ersichtlich auch in den Figuren 5 und 6) ist das Versteifungselement 7 bzw. ein jeweiliger Versteifungsabschnitt 14 als ein geschlossenes Hohlprofil mit einem kreisrunden Querschnitt ausgebildet. Zudem weist die darin gezeigte Querschnittsform eine konstante Querschnittsfläche entlang einer Längserstreckung des zumindest einen Versteifungselements 7 bzw. entlang des jeweiligen Versteifungsabschnitts 14 auf (dies muss jedoch nicht zu sein, sind auch variierende Querschnittsformen denkbar).

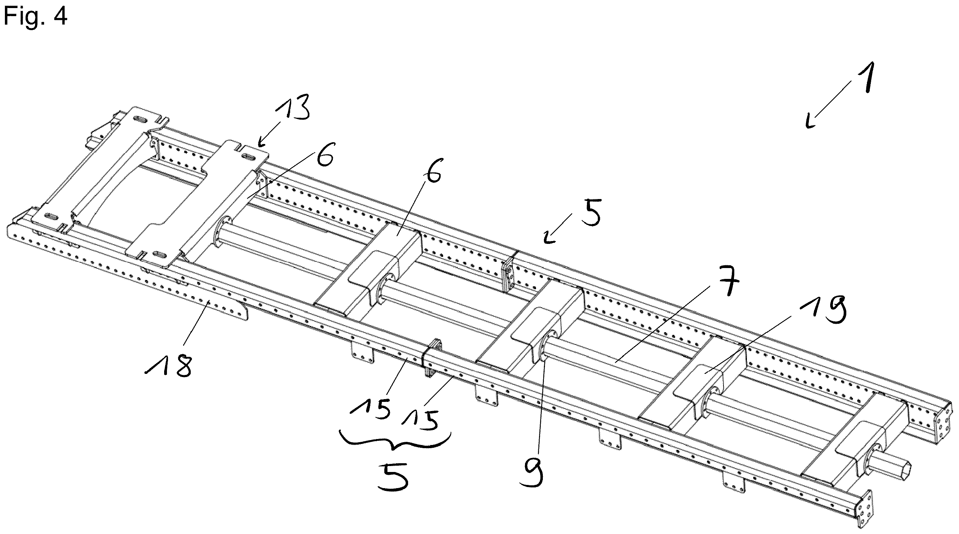

In Figur 4 ist eine weitere Ausführung des Hilfsrahmens 1 gezeigt, wobei sich diese Ausführung von der Ausführung des Hilfsrahmens 1 der übrigen Figuren im Wesentlichen nur darin unterscheidet, dass das Versteifungselement 7 (welches auch aus zumindest zwei Versteifungsabschnitten bestehen kann) eine abweichende Querschnittsform aufweist. In dieser Ausführung des Hilfsrahmens 1 ist das Versteifungselement 7 als ein geschlossenes Hohlprofil mit einem hexagonalen Querschnitt ausgebildet. Zudem weist die darin gezeigte Querschnittsform eine konstante Querschnittsfläche entlang einer Längserstreckung des zumindest einen Versteifungselements 7 auf (dies muss jedoch nicht zu sein, sind auch variierende Querschnittsformen denkbar).

In den Figuren 5a bis 5c sind verschiedene Ansichten zu einer Anordnung aus einem Fahrzeug 4, einem Arbeitsgerät 2 in Form eines Ladekrans und einem Hilfsrahmen 1 mit einem Versteifungselement 7 gemäß der Ausführung der Figur 1 gezeigt. Zur Befestigung des Hilfsrahmens 1 am Fahrzeugrahmen 3 weist der Hilfsrahmen 1 an den Längsträgern 5 angeordnete Befestigungsstellen 18 auf. Eine Verbindung kann beispielsweise über eine Verschraubung erfolgen.

Wie in den Figuren 5a bis 5c gezeigt ist, kann zur Montage eines Arbeitsgeräts 2 an einem Fahrzeugrahmen 3 eines Fahrzeugs 4 ein einzelner Hilfsrahmen 1 ausreichend sein.

Der Hilfsrahmen 1 kann direkt auf dem Fahrzeugrahmen 3 angeordnet werden.

Zur Befestigung des Arbeitsgeräts 2 am Hilfsrahmen 1 weist dieser eine Befestigungsstelle 13 auf.

In der Figur 5b ist der Hilfsrahmen 1 bzw. die Befestigungsstelle 13 am Hilfsrahmen 1 so orientiert, dass das Arbeitsgerät 2 in einem Bereich der Vorderachse 16 des Fahrzeugs 4 befestigt ist. In der gezeigten Ausführung verläuft das Versteifungselement 7 von der Befestigungsstelle 13 bis zu einem heckseitigen Ende des Fahrzeugrahmens 3 und damit bis zur Hinterachse 17 und über diese hinaus.

In der Figur 5c ist der Hilfsrahmen 1 bzw. die Befestigungsstelle 13 am Hilfsrahmen 1 so orientiert, dass das Arbeitsgerät 2 in einem Bereich der Hinterachse 17 des Fahrzeugs 4 befestigt ist. In der gezeigten Ausführung verläuft das Versteifungselement 7 von der Befestigungsstelle 13 bis zu einem vorderseitigen Ende des Fahrzeugrahmens 3 im Bereich der Vorderachse 16.

In der in Figur 5 gezeigten Ausführung weist das Arbeitsgerät 2 in Form des Ladekrans eine Abstützverbreiterungen 20 auf, über welche das Arbeitsgerät 2 in Form des Ladekrans zusätzlich auf einer Fahrbahn, auf welcher das Fahrzeug 4 abgestellt ist, abgestützt werden kann. Vorteilhafterweise ist die Abstützverbreiterungen 20 an jenem Querträger 6 gelagert, an welchem die Befestigungsstelle 13 ausgebildet ist und an welchem auch das Versteifungselement 7 befestigt ist.

In Figur 6 ist eine perspektivische Ansicht zu einer weiteren, zur Figur 5b analogen Anordnung aus einem Fahrzeug 4 mit zwei Arbeitsgeräten 2 und einem Hilfsrahmen 1 mit einem Versteifungselement 7gemäß der Ausführung der Figur 1 gezeigt. Auf dem am Fahrzeugrahmen 3 angeordneten Hilfsrahmen 1 sind in einem Bereich der Vorderachse 16 des Fahrzeugs 4 zwei Arbeitsgeräte 2 in Form eines Ladekrans und eines Hakenladegeräts zum Laden eines Containers 21 befestigt.

### Bezugszeichenliste:

- 1: Hilfsrahmen
- 2: Arbeitsgerät
- 3: Fahrzeugrahmen
- 4: Fahrzeug
- 5: Längsträger
- 6: Querträger
- 7: Versteifungselement
- 8: Befestigungsbereich Versteifungselement
- 9: Flansch
- 10: Verbindungsmittel
- 11: Aufnahmeöffnung
- 12: Ausnehmung
- 13: Befestigungsstelle Arbeitsgerät
- 14: Versteifungsabschnitt Versteifungselement
- 15: Längsabschnitt Längsträger
- 16: Vorderachse
- 17: Hinterachse
- 18: Befestigungsstelle Fahrzeugrahmen
- 19: Verstärkung
- 20: Abstützverbreiterungen
- 21: Container
- q: Quererstreckung

## Patentansprüche

1. Hilfsrahmen (1) zur Montage zumindest eines Arbeitsgeräts (2), insbesondere zumindest einer hydraulischen Hebevorrichtung, an einem Fahrzeugrahmen (3) eines Fahrzeugs (4) mit
- zumindest zwei sich in einer Längsrichtung erstreckenden Längsträgern (5) und
- zumindest zwei zwischen den zumindest zwei Längsträgern (5) verlaufenden Querträgern (6), wobei sich die zumindest zwei Querträger (6) quer zur Längsrichtung der zumindest zwei Längsträger (5) erstrecken
wobei der Hilfsrahmen (1) zumindest ein zentral zumindest abschnittsweise zwischen den Längsträgern (5) verlaufendes und zumindest abschnittsweise zwischen den zumindest zwei Querträgern (6) verlaufendes Versteifungselement (7) zur Erhöhung der Torsionssteifigkeit des Hilfsrahmens (1) aufweist, **dadurch gekennzeichnet, dass** das zumindest eine Versteifungselement (7) jeweils kraftschlüssig über eine torsionsfeste Verbindung mit Verbindungsmitteln (10) an einem jeweiligen Befestigungsbereich (8) jeweils mit den zumindest zwei Querträgern (6) verbunden ist, wobei die zumindest zwei Querträger (6) jeweils profiliert ausgebildet sind und in zumindest einem der zumindest zwei Querträger (6) zumindest eine Ausnehmung (12) zur zumindest teilweisen Aufnahme des zumindest einen Versteifungselements (7) vorgesehen ist.

2. Hilfsrahmen (1) nach Anspruch 1, wobei die zumindest zwei Querträger (6) jeweils im Befestigungsbereich (8) eine Verstärkung (19) aufweisen.

3. Hilfsrahmen (1) nach einem der vorangehenden Ansprüche, wobei das zumindest eine Versteifungselement (7) jeweils über lösbare und/oder unlösbare Verbindungen formschlüssig an einem jeweiligen Befestigungsbereich (8) jeweils mit den zumindest zwei Querträgern (6) verbunden ist, wobei vorzugsweise die zumindest zwei Querträger (6) jeweils im Befestigungsbereich (8) eine Verstärkung (19) aufweisen.

4. Hilfsrahmen (1) nach einem der Ansprüche 1 bis 3, wobei das Versteifungselement (7) zumindest einen radial abstehenden Flansch (9) zur Verbindung mit den Querträgern (6) aufweist.

5. Hilfsrahmen (1) nach einem der Ansprüche 1 bis 4, wobei das zumindest eine Versteifungselement (7) über zumindest eine Spannhülse mit den Querträgern (6) verbunden ist.

6. Hilfsrahmen (1) nach den beiden vorangehenden Ansprüchen, wobei in dem zumindest einen radial abstehenden Flansch (9) und den zumindest zwei Querträgern (6) Aufnahmeöffnungen (11) für die Verbindungsmittel (10) vorgesehen sind, wobei die Aufnahmeöffnungen (11) koaxial, vorzugsweise konzentrisch, zu einer Längsachse des Versteifungselements (7) angeordnet sind.

7. Hilfsrahmen (1) nach einem der vorangehenden Ansprüche, wobei die zumindest zwei Querträger (6) jeweils mit den zumindest zwei Längsträgern (5) über eine lösbare Verbindung, vorzugsweise über eine Schraubverbindung, miteinander verbunden sind.

8. Hilfsrahmen (1) nach einem der vorangehenden Ansprüche, wobei
- das zumindest eine Versteifungselement (7) gesondert von den Längsträgern (5) ausgebildet ist, und/oder
- das zumindest eine Versteifungselement (7) im Wesentlichen parallel zu den zumindest zwei Längsträgern (5) verläuft, und/oder
- das zumindest eine Versteifungselement (7) in Form eines, vorzugsweise geschlossenen, Hohlprofils ausgebildet ist, und/oder
- das zumindest eine Versteifungselement (7) in Form eines Hohlprofils einen polygonalen oder kreisrunden Querschnitt, vorzugsweise mit konstanter Querschnittsfläche entlang einer Längserstreckung des zumindest einen Versteifungselements (7), aufweist, und/oder
- das zumindest eine Versteifungselement (7), vorzugsweise zumindest abschnittsweise, einstückig ausgebildet ist, und/oder
- das zumindest eine Versteifungselement (7) zumindest zwei voneinander gesonderte und miteinander verbindbare Versteifungsabschnitte (14) aufweist, wobei vorzugsweise die zumindest zwei Versteifungsabschnitte (14) jeweils zwischen zwei benachbarten Querträgern (6) angeordnet sind.

9. Hilfsrahmen (1) nach einem der vorangehenden Ansprüche, wobei die zumindest zwei Querträger (6) eine quer zur Längsrichtung der zumindest zwei Längsträger (5) verlaufende Quererstreckung (q) aufweisen und das zumindest eine Versteifungselement (7) im Wesentlichen in der Mitte der Quererstreckung zwischen den zumindest zwei Querträgern (6) angeordnet ist.

10. Hilfsrahmen (1) nach einem der vorangehenden Ansprüche, wobei der Hilfsrahmen (1) zumindest eine Befestigungsstelle (13) für das zumindest eine Arbeitsgerät (2) in einem Bereich eines der zumindest zwei Querträger (6), vorzugsweise in Form eines der zumindest zwei Querträger (6), aufweist, wobei das zumindest eine Versteifungselement (7) mit der zumindest einen Befestigungsstelle (13) für das zumindest eine Arbeitsgerät (2) verbunden ist.

11. Hilfsrahmen (1) nach einem der vorangehenden Ansprüche, wobei die zumindest zwei Längsträger (5) jeweils einstückig oder aus miteinander verbundenen Längsabschnitten (15) ausgebildet sind.

12. Hilfsrahmen (1) nach einem der vorangehenden Ansprüche, wobei die zumindest zwei Längsträger (5) und/oder die zumindest zwei Querträger (6) jeweils eine Höhenerstreckung aufweisen und das zumindest eine Versteifungselement (7) mit dessen Höhenerstreckung im Wesentlichen vollständig innerhalb der Höhenerstreckung der Längsträger (5) und/oder der Höhenerstreckung der Querträger (6) angeordnet ist.

13. Hilfsrahmen (1) nach einem der vorangehenden Ansprüche, wobei die Querschnittsform der zumindest zwei Längsträger (5) und/oder der zumindest zwei Querträger (6) von der Querschnittsform des zumindest einen Versteifungselements (7) abweicht.

14. Hilfsrahmen (1) nach einem der vorangehenden Ansprüche, wobei der Hilfsrahmen (1) zur unmittelbaren Montage an einem Fahrzeugrahmen (3) eines Fahrzeugs (4) ausgebildet ist.

15. Fahrzeug (4), vorzugsweise Lastkraftwagen, mit einem Fahrzeugrahmen (3) und einem auf dem Fahrzeugrahmen (3) angeordneten Hilfsrahmen (1) nach einem der vorangehenden Ansprüche, wobei vorzugsweise der Hilfsrahmen (1) unmittelbar auf dem Fahrzeugrahmen (3) angeordnet ist.

16. Fahrzeug (4) nach dem vorangehenden Anspruch, wobei der Hilfsrahmen (1) zumindest eine Befestigungsstelle (13) für das zumindest eine Arbeitsgerät (2) in einem Bereich eines der zumindest zwei Querträger (6), vorzugsweise in Form eines der zumindest zwei Querträger (6), aufweist, wobei das zumindest eine Versteifungselement (7) mit der zumindest einen Befestigungsstelle (13) für das zumindest eine Arbeitsgerät (2) verbunden ist und sich zumindest bis zu einer Hinterachse (17) des Fahrzeugs (4) erstreckt.

## Claims

1. A subframe (1) for mounting at least one working implement (2), in particular at least one hydraulic lifting device, on a vehicle chassis (3) of a vehicle (4), with
- at least two longitudinal members (5) extending in a longitudinal direction and
- at least two transverse members (6) running between the at least two longitudinal members (5), wherein the at least two transverse members (6) extend transversely to the longitudinal direction of the at least two longitudinal members (5),
wherein
the subframe (1) has at least one reinforcing element (7) which runs centrally at least in sections between the longitudinal members (5) and at least in sections between the at least two transverse members (6) in order to increase the torsional stiffness of the subframe (1),
**characterized in that** the at least one reinforcing element (7) is respectively connected in a force-fitting manner by means of a torsion-resistant connection having connection means (10) at a respective attachment region (8) respectively to the at least two transverse members (6), wherein the at least two transverse members (6) are each of a profiled configuration and at least one recess (12) is provided in at least one of the at least two transverse members (6) for at least partially receiving the at least one reinforcing element (7).

2. The subframe (1) according to claim 1, wherein the at least two transverse members (6) each have a reinforcement (19) in the attachment region (8).

3. The subframe (1) according to one of the preceding claims, wherein the at least one reinforcing element (7) is respectively connected in an interlocking manner by means of releasable and/or non-releasable connections at a respective attachment region (8) respectively to the at least two transverse members (6), wherein preferably, the at least two transverse members (6) each have a reinforcement (19) in the attachment region (8).

4. The subframe (1) according to one of claims 1 to 3, wherein the reinforcing element (7) has at least one radially protruding flange (9) for connection to the transverse members (6).

5. The subframe (1) according to one of claims 1 to 4, wherein the at least one reinforcing element (7) is connected to the transverse members (6) by means of at least one clamping sleeve.

6. The subframe (1) according to the two preceding claims, wherein receiving openings (11) are provided for the connection means (10) in the at least one radially protruding flange (9) and the at least two transverse members (6), wherein the receiving openings (11) are arranged coaxially, preferably concentrically to a longitudinal axis of the reinforcing element (7).

7. The subframe (1) according to one of the preceding claims, wherein the at least two transverse members (6) are each connected together with the at least two longitudinal members (5) by means of a releasable connection, preferably by means of a screw connection.

8. The subframe (1) according to one of the preceding claims, wherein
- the at least one reinforcing element (7) is constructed separately from the longitudinal members (5), and/or
- the at least one reinforcing element (7) runs substantially parallel to the at least two longitudinal members (5), and/or
- the at least one reinforcing element (7) is in the form of a hollow profile which is preferably closed, and/or
- the at least one reinforcing element (7) in the form of a hollow profile has a polygonal or circular cross section, preferably with a constant cross-sectional area along a longitudinal extent of the at least one reinforcing element (7), and/or
- the at least one reinforcing element (7) is constructed in one piece, preferably at least in sections, and/or
- the at least one reinforcing element (7) has at least two reinforcing sections (14) which are separate from each other, and which can be connected to each other, wherein preferably, the at least two reinforcing sections (14) are each arranged between two adjacent transverse members (6).

9. The subframe (1) according to one of the preceding claims, wherein the at least two transverse members (6) have a transverse extent (q) which runs transversely to the longitudinal direction of the at least two longitudinal members (5) and the at least one reinforcing element (7) is arranged substantially in the centre of the transverse extent between the at least two transverse members (6).

10. The subframe (1) according to one of the preceding claims, wherein the subframe (1) has at least one attachment position (13) for the at least one working implement (2) in a region of one of the at least two transverse members (6), preferably in the form of one of the at least two transverse members (6), wherein the at least one reinforcing element (7) is connected to the at least one attachment position (13) for the at least one working implement (2).

11. The subframe (1) according to one of the preceding claims, wherein the at least two longitudinal members (5) are each formed in one piece or from longitudinal sections (15) which are connected to each other.

12. The subframe (1) according to one of the preceding claims, wherein the at least two longitudinal members (5) and/or the at least two transverse members (6) each have a vertical extent and the vertical extent of the at least one reinforcing element (7) is substantially entirely arranged within the vertical extent of the longitudinal members (5) and/or the vertical extent of the transverse members (6).

13. The subframe (1) according to one of the preceding claims, wherein the cross-sectional shape of the at least two longitudinal members (5) and/or of the at least two transverse members (6) differs from the cross-sectional shape of the at least one reinforcing element (7).

14. The subframe (1) according to one of the preceding claims, wherein the subframe (1) is configured for mounting directly on a vehicle chassis (3) of a vehicle (4).

15. A vehicle (4), preferably a truck, with a vehicle chassis (3) and a subframe (1) according to one of the preceding claims arranged on the vehicle chassis (3), wherein preferably, the subframe (1) is arranged directly on the vehicle chassis (3).

16. The vehicle (4) according to the preceding claim, wherein the subframe (1) has at least one attachment position (13) for the at least one working implement (2) in a region of one of the at least two transverse members (6), preferably in the form of one of the at least two transverse members (6), wherein the at least one reinforcing element (7) is connected to the at least one attachment position (13) for the at least one working implement (2) and extends at least to a rear axle (17) of the vehicle (4).

## Revendications

1. Cadre auxiliaire (1) pour le montage au moins d'un appareil de travail (2), en particulier au moins d'un dispositif de levage hydraulique, au niveau d'un cadre de véhicule (3) d'un véhicule (4) avec
- au moins deux longerons (5) s'étendant dans un sens longitudinal et
- au moins deux traverses (6) s'étendant entre les au moins deux longerons (5), dans lequel les au moins deux traverses (6) s'étendent transversalement au sens longitudinal des au moins deux longerons (5),
dans lequel le cadre auxiliaire (1) présente au moins un élément de renfort (7) s'étendant centralement au moins par sections entre les longerons (5) et s'étendant au moins par sections entre les au moins deux traverses (6) pour l'augmentation de la rigidité à la torsion du cadre auxiliaire (1),
**caractérisé en ce que** l'au moins un élément de renfort (7) est relié respectivement à force par le biais d'une liaison résistante à la torsion avec des moyens de liaison (10) au niveau d'une zone de fixation (8) respective respectivement aux au moins deux traverses (6), dans lequel les au moins deux traverses (6) sont réalisées respectivement profilées et dans au moins une des au moins deux traverses (6), au moins un évidement (12) est prévu pour la réception au moins partielle d'au moins un élément de renfort (7).

2. Cadre auxiliaire (1) selon la revendication 1, dans lequel les au moins deux traverses (6) présentent respectivement dans la zone de fixation (8) un renforcement (19).

3. Cadre auxiliaire (1) selon l'une quelconque des revendications précédentes, dans lequel l'au moins un élément de renfort (7) est relié respectivement par le biais de liaisons amovibles et/ou inamovibles à complémentarité de forme au niveau d'une zone de fixation (8) respective aux au moins deux traverses (6), dans lequel de préférence les au moins deux traverses (6) présentent respectivement dans la zone de fixation (8) un renforcement (19).

4. Cadre auxiliaire (1) selon l'une quelconque des revendications 1 à 3, dans lequel l'élément de renfort (7) présente au moins une bride (9) dépassant radialement pour la liaison avec les traverses (6).

5. Cadre auxiliaire (1) selon l'une quelconque des revendications 1 à 4, dans lequel l'au moins un élément de renfort (7) est relié par le biais d'au moins une douille de serrage aux traverses (6).

6. Cadre auxiliaire (1) selon les deux revendications précédentes, dans lequel dans l'au moins une bride dépassant radialement (9) et les au moins deux traverses (6), des ouvertures de réception (11) sont prévues pour les moyens de liaison (10), dans lequel les ouvertures de réception (11) sont agencées coaxialement, de préférence concentriquement, à un axe longitudinal de l'élément de renfort (7).

7. Cadre auxiliaire (1) selon l'une quelconque des revendications précédentes, dans lequel les au moins deux traverses (6) sont reliées entre elles respectivement aux au moins deux longerons (5) par le biais d'une liaison amovible, de préférence par le biais d'une liaison vissée.

8. Cadre auxiliaire (1) selon l'une quelconque des revendications précédentes, dans lequel
- l'au moins un élément de renfort (7) est réalisé séparément des longerons (5), et/ou
- l'au moins un élément de renfort (7) s'étend sensiblement parallèlement aux au moins deux longerons (5), et/ou
- l'au moins un élément de renfort (7) est réalisé sous la forme d'un profil creux de préférence fermé, et/ou
- l'au moins un élément de renfort (7) sous la forme d'un profil creux présente une section transversale polygonale ou ronde et circulaire de préférence avec une section transversale constante le long d'une étendue longitudinale de l'au moins un élément de renfort (7), et/ou
- l'au moins un élément de renfort (7) est réalisé de préférence au moins par sections d'un seul tenant, et/ou
- l'au moins un élément de renfort (7) présente au moins deux sections de renforcement (14) séparées l'une de l'autre et pouvant être reliées entre elles, dans lequel de préférence les au moins deux sections de renforcement (14) sont agencées respectivement entre deux traverses (6) contigües.

9. Cadre auxiliaire (1) selon l'une quelconque des revendications précédentes, dans lequel les au moins deux traverses (6) présentent une étendue transversale (q) s'étendant transversalement au sens longitudinal des au moins deux longerons (5) et l'au moins un élément de renfort (7) est agencé sensiblement au milieu de l'étendue transversale entre les au moins deux traverses (6).

10. Cadre auxiliaire (1) selon l'une quelconque des revendications précédentes, dans lequel le cadre auxiliaire (1) présente au moins un point de fixation (13) pour l'au moins un appareil de travail (2) dans une zone d'une des au moins deux traverses (6), de préférence sous la forme d'une des au moins deux traverses (6), dans lequel l'au moins un élément de renfort (7) est relié à l'au moins un point de fixation (13) pour l'au moins un appareil de travail (2).

11. Cadre auxiliaire (1) selon l'une quelconque des revendications précédentes, dans lequel les au moins deux longerons (5) sont réalisés respectivement d'un seul tenant ou à partir de sections longitudinales (15) reliées entre elles.

12. Cadre auxiliaire (1) selon l'une quelconque des revendications précédentes, dans lequel les au moins deux longerons (5) et/ou les au moins deux traverses (6) présentent respectivement une étendue verticale et l'au moins un élément de renfort (7) est agencé avec son étendue verticale sensiblement complètement dans l'étendue verticale des longerons (5) et/ou l'étendue verticale des traverses (6).

13. Cadre auxiliaire (1) selon l'une quelconque des revendications précédentes, dans lequel la forme de section des au moins deux longerons (5) et/ou des au moins deux traverses (6) diverge de la forme de section de l'au moins un élément de renfort (7).

14. Cadre auxiliaire (1) selon l'une quelconque des revendications précédentes, dans lequel le cadre auxiliaire (1) est réalisé pour le montage direct au niveau d'un cadre de véhicule (3) d'un véhicule (4).

15. Véhicule (4), de préférence camion, avec un cadre de véhicule (3) et un cadre auxiliaire (1) agencé sur le cadre de véhicule (3) selon l'une quelconque des revendications précédentes, dans lequel de préférence le cadre auxiliaire (1) est agencé directement sur le cadre de véhicule (3).

16. Véhicule (4) selon la revendication précédente, dans lequel le cadre auxiliaire (1) présente au moins un point de fixation (13) pour l'au moins un appareil de travail (2) dans une zone d'une des au moins deux traverses (6), de préférence sous la forme d'une des au moins deux traverses (6), dans lequel l'au moins un élément de renfort (7) est relié à l'au moins un point de fixation (13) pour l'au moins un appareil de travail (2) et s'étend au moins jusqu'à un essieu arrière (17) du véhicule (4).
